(19) Europäisches Patentamt
European Patent Office
Office européen des brevets

(11) **EP 3 571 703 B1**

(12) **EUROPÄISCHE PATENTSCHRIFT**

(45) Veröffentlichungstag und Bekanntmachung des Hinweises auf die Patenterteilung:
**16.09.2020   Patentblatt 2020/38**

(21) Anmeldenummer: **18702619.0**

(22) Anmeldetag: **15.01.2018**

(51) Int Cl.:
*H01F 7/18* (2006.01)    *G01D 5/20* (2006.01)

(86) Internationale Anmeldenummer:
**PCT/EP2018/050834**

(87) Internationale Veröffentlichungsnummer:
**WO 2018/134147 (26.07.2018 Gazette 2018/30)**

(54) **VERFAHREN UND ANORDNUNG ZUR BESTIMMUNG DER ANKERPOSITION EINES ELEKTROMAGNETEN**

METHOD AND ARRANGEMENT FOR DETERMINING THE ARMATURE POSITION OF AN ELECTROMAGNET

PROCÉDÉ ET AGENCEMENT DE DÉTERMINATION DE LA POSITION D'ANCRAGE D'UN ÉLECTROAIMANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.01.2017   DE 102017200828**

(43) Veröffentlichungstag der Anmeldung:
**27.11.2019   Patentblatt 2019/48**

(73) Patentinhaber: **Voith Patent GmbH**
**89522 Heidenheim (DE)**

(72) Erfinder:
• **ULM, Jürgen**
**74575 Schorzberg (DE)**
• **GRADL, Stefan**
**76709 Kronau (DE)**
• **STEHLIK, Pascal**
**73033 Göppingen (DE)**
• **KNORR, Marc**
**74391 Erligheim (DE)**
• **BREDLOW, Oliver**
**12347 Berlin (DE)**
• **VOGEL, Oliver**
**74653 Gaisbach (DE)**
• **MOTZER, Bastian**
**72119 Ammerbuch (DE)**

(74) Vertreter: **Gagel, Roland**
**Patentanwalt Dr. Roland Gagel**
**Landsberger Strasse 480a**
**81241 München (DE)**

(56) Entgegenhaltungen:
**EP-A2- 0 949 744        DE-A1- 2 226 101**
**DE-A1- 4 129 265        DE-A1- 19 501 766**
**DE-A1- 19 505 219        DE-A1-102012 005 685**
**DE-A1-102013 215 939    DE-B3-102014 012 307**

## Beschreibung

### Technisches Anwendungsgebiet

Die vorliegende Erfindung betrifft ein Verfahren und eine Anordnung zur Bestimmung der Position des Ankers eines Elektromagneten, wie er beispielsweise als Stellglied zur Betätigung mechanischer oder elektrischer Komponenten eingesetzt wird.

Bei vielen Anwendungen von Elektromagneten ist eine Überwachung der Ankerposition wünschenswert, um beispielsweise jeweils den momentanen Zustand eines Mechanismus, der durch den Elektromagneten betätigt wird, erfassen zu können. Konkrete Beispiele sind die Überwachung der Öffnungs- oder Verschlussposition von Brandschutztüren, die mittels Elektromagneten betätigt werden, oder die Betätigung von Ventilen.

### Stand der Technik

Bisherige Lösungen zur Überwachung der Ankerposition eines Elektromagneten nutzen Sensoren, Videoanalysen oder die Auswertung des Erregerstroms des Elektromagneten. Bei Verwendung von Sensoren muss deren Einsatz bzw. Position jedoch schon bei der Auslegung des Magnetkreises des Elektromagneten berücksichtigt werden. Eine Auswertung der Ankerposition durch Videoanalyse ist aufwändig und teuer.

Aus der DE 195 05 219 A1 ist ein Gerät zur Erfassung der Position des Ankers einer elektromagnetischen Stelleinrichtung bekannt, das ohne Anbringen von Lagesensoren auskommt. Bei dem Gerät werden die Spulenspannung und der Spulenstrom des Elektromagneten erfasst, um daraus die momentane Position des Ankers eines Hubmagneten abzuleiten.

Die DE 10 2012 005 685 A1 beschreibt ein Verfahren zur sensorlosen Positionsbestimmung des Ankers eines Elektromagneten, bei dem die Ankerposition aus einer Phasenverschiebung zwischen einer Wechselspannungskomponente und der Wechselstromkomponente des Stroms durch die Spule des Elektromagneten bestimmt wird.

Auch aus der DE 10 2013 215 939 A1 und der DE 22 26 101 A sind Verfahren zur sensorlosen Positionsbestimmung des Ankers eines Elektromagneten bekannt. Bei der erstgenannten Druckschrift wird hierfür die von der Lage des Ankers abhängige Induktivitätsänderung einer Magnetspule genutzt, die den Anker bewegt. Bei der zweitgenannten Druckschrift wird eine von der Lage des Ankers abhängige Verteilung des magnetischen Flusses über die Änderung von induzierten Spannungen in geeignet angeordneten Spulen erfasst.

Die Veröffentlichung von A. Ambia et al., "Electrical Impedance Imaging Using Eddy Current", in: International Journal of Electrical, Computer, Energetic, Electronic and Communication Engineering, Vol. 2, Nr. 4, 2008, S. 597-600 beschreibt die Technik der elektrischen Impedanztomographie, um die räumliche Verteilung elektrischer Leitfähigkeit innerhalb einer Probe zu bestimmen. Hierbei wird ausgenutzt, dass das Magnetfeld einer Spule eine Wirbelstromverteilung in der Probe verursacht, die von der Leitfähigkeitsverteilung in der Probe und der Feldverteilung des magnetischen Feldes abhängt. Die bei unterschiedlichen Abständen des Magnetkerns von der Probe verursachten Spannungsunterschiede in der Probe werden zwischen zwei Stellen an der Probe gemessen und aus den unterschiedlichen Messungen dann ein Bild der Leitfähigkeitsverteilung innerhalb der Probe erzeugt. Diese Veröffentlichung befasst sich somit mit einem vollkommen anderen technischen Gebiet.

DE 41 29 265 A1, EP 0 949 744 A2 und DE 195 01 766 A1 offenbaren weitere Beispiele von bekannten alternativen Positionsmessungen in Elektromagneten mit einem zusätzlichen Magnetflusssensor.

DE 10 2014 012307 B3 offenbart ein weiteres Beispiel von bekannten alternativen sensorlosen Positionsmessungen in Elektromagneten.

Die Aufgabe der vorliegenden Erfindung besteht darin, ein Verfahren sowie eine Anordnung zur Bestimmung der Position des Ankers eines Elektromagneten anzugeben, die sich kostengünstig realisieren lassen und auch ohne weiteres nachträglich an bestehenden Magnetsystemen eingesetzt werden können.

### Darstellung der Erfindung

Die Aufgabe wird mit dem Verfahren und der Anordnung gemäß den Patentansprüchen 1 und 10 gelöst. Vorteilhafte Ausgestaltungen des Verfahrens sowie der Anordnung sind Gegenstand der abhängigen Patentansprüche oder lassen sich der nachfolgenden Beschreibung sowie den Ausführungsbeispielen entnehmen.

Bei dem vorgeschlagenen Verfahren zur Bestimmung der Position des Ankers eines Elektromagneten wird an dem Joch oder dem Anker des Elektromagneten wenigstens eine Differenzspannung zwischen zwei Messstellen am Joch oder Anker oder zwischen einer Messstelle am Joch oder Anker und einem Bezugspotential gemessen und aus der gemessenen Differenzspannung die Position des Ankers relativ zu einer Bezugsposition am Elektromagneten bestimmt. Die Messung erfolgt während des Betriebs des Elektromagneten, also während eines Stromflusses durch die Spule des Elektromagneten. Sie kann kontinuierlich oder wiederholt oder auch nur dann erfolgen, wenn die Position des Ankers erfasst werden soll. Die Bestimmung der (von einer Nullposition abweichenden) Ankerposition über die Messung der Differenzspannung(en) setzt dabei voraus, dass die jeweils zu bestimmende Ankerposition eine inhomogene Verteilung der im Joch induzierten Wirbelströme verursacht. Dies ist bei vielen Ausführungen von Elektromagneten bzw. bei vielen Ankerpositionen der Fall. Die Lage der Messstellen am Joch oder Anker wird dabei so gewählt, dass durch die jeweilige Position des Ankers bei Auslenkung aus der Nullposition hervorgerufene Potentialunterschiede oder -änderungen im Joch oder Anker über die gemessene Differenzspannung erfasst werden können. Unter der Nullposition ist hierbei eine Ankerposition zu verstehen, bei der eine homogene Wirbelstromverteilung und damit keine Potentialunterschiede im Joch oder Anker vorliegen, insbesondere die Ruheposition des Ankers am Joch.

Das Verfahren nutzt somit die durch eine inhomogene Wirbelstromverteilung bei einer Auslenkung des Ankers erzeugten Potentialunterschiede im Joch oder Anker, um aus diesen Potentialunterschieden die momentane Position des Ankers relativ zu einer Bezugsposition zu bestimmen. Als Bezugsposition kann insbesondere die Ruheposition des Ankers am Joch dienen, in der der magnetische Kreis geschlossen ist. In Abhängigkeit vom Aufbau des Elektromagneten und der Anordnung der Messstellen kann die Ankerposition dabei in bis zu drei Achsen bestimmt werden.

Bei dem vorgeschlagenen Verfahren und der zugehörigen Anordnung werden die beim Betrieb des Elektromagneten auftretenden Wirbelströme im Joch oder Anker genutzt, um daraus die Position, insbesondere Ort und/oder Orientierung, des Ankers zu bestimmen. Wird ein Magnetsystem mit einem zeitlich veränderlichen Strom beaufschlagt, wirft dieser einen zeitlichen veränderlichen Fluss hervor. Dies hat eine induzierte elektrische Spannung $u_{ind}$ zur Folge:

$$u_{ind} = \oint E ds = \frac{-d\phi}{dt}.$$

Hierdurch entstehen Wirbelströme $i_{wirb}$ im elektrisch leitfähigen Material des Jochs, welche wieder ein induziertes magnetisches Feld $H_{ind}$ zur Folge haben:

$$i_{wirb} = -\frac{1}{R_{el}} \frac{d\phi}{dt} = \oint H_{ind} dl.$$

Bei einer homogenen Verteilung der Wirbelströme herrscht dabei im gesamten elektrisch leitfähigen Material das gleiche Potential. Ist die Verteilung der Wirbelströme inhomogen, so entstehen Potentialunterschiede. Diese Potentialunterschiede können als Differenzspannungen am Joch oder am Anker gemessen werden. Hierfür werden beim vorgeschlagenen Verfahren und der zugehörigen Anordnung elektrische Abgriffe am durchfluteten und elektrisch leitfähigen Material des Magnetsystems, also am Joch oder am Anker des Elektromagneten, angebracht. Durch Festlegung eines Koordinatensystems und Auswertung der gemessenen Differenzspannungen können Rückschlüsse auf die relative Lage des Ankers zum Joch getroffen werden.

In einer vorteilhaften Ausgestaltung des vorgeschlagenen Verfahrens werden die eine oder mehreren gemessenen Differenzspannungen mit Werten einer Kalibrierkurve oder Kalibriertabelle verglichen, die vorab für diesen Elektromagneten erstellt wurde. Diese Kalibrierkurve oder Kalibriertabelle gibt für jeden Wert einer an den entsprechenden Messstellen gemessenen Differenzspannung die jeweilige Position des Ankers an. Auf diese Weise lässt sich die Ankerposition über die Messung der einen oder mehreren Differenzspannungen exakt bestimmen.

In einer weiteren Ausgestaltung wird die Ankerposition anhand einer aus dem Induktionsgesetz abgeleiteten Abhängigkeit der Höhe der Differenzspannung vom Abstand des Ankers zur Bezugsposition bestimmt. Diese Bestimmung beruht auf einer Abschätzung oder einer Simulation und ist damit nicht so exakt wie die vorangegangene Ausgestaltung mit der Kalibrierkurve oder Kalibriertabelle. Für viele Anwendungen ist die Bestimmung der ungefähren Position des Ankers jedoch ausreichend, um beispielsweise die offene oder geschlossene Position eines Stellglieds zu ermitteln.

Vorzugsweise werden mehrere Differenzspannungen zwischen unterschiedlichen Messstellen am Joch oder am Anker gemessen, um daraus die Position des Ankers zu bestimmen. Dies ist insbesondere von Vorteil, wenn die Position des Ankers in mehr als einer Dimension bzw. Achse bestimmt werden soll. Vorzugsweise werden dann wenigstens zwei Differenzspannungen zwischen jeweils zwei Messstellen gemessen, die auf zueinander senkrechten Achsen liegen. Die Messstellen auf jeder Achse sind hierbei wie auch bei Messung von nur einer Differenzspannung jeweils vorzugsweise möglichst weit voneinander entfernt, um eine hohe Sensitivität zu erreichen. Die Lage der gewählten Messstellen hängt von der Art des Elektromagneten, das heißt von der geometrischen Form des Jochs und der Bewegungsmöglichkeiten des Ankers ab. Die Messstellen sollten außerdem gut zugänglich sein.

Bei Elektromagneten, bei denen der Anker auch Positionen entlang einer Achse einnehmen kann, die keine inhomogene Verteilung der Wirbelströme im Joch oder Anker auslösen, kann eine derartige Achsenposition bei Bedarf durch Erfassung und Auswertung des Spulenstroms ermittelt werden, wie dies aus dem bereits genannten Stand der Technik bekannt ist. Andere Positionen werden über die Messung der Differenzspannungen bestimmt.

Die vorgeschlagene Anordnung umfasst einen Elektromagneten, der wenigstens eine Spule, ein Joch und einen relativ zum Joch beweglichen Anker aufweist. Am Joch oder am Anker des Elektromagneten ist wenigstens ein elektrischer Abgriff zwischen zwei Messstellen angebracht, über den eine Differenzspannung zwischen den zwei Messstellen erfasst werden kann. Alternativ kann der Abgriff auch nur zwischen einer Messstelle und einem Bezugspotential ausgebildet sein. Die Anordnung weist weiterhin eine mit dem elektrischen Abgriff verbundene Messeinrichtung zur Messung der Differenzspannung und eine Auswerteeinrichtung auf, die auf Basis der gemessenen Differenzspannung eine Position des Ankers relativ zu einer Bezugsposition am Elektromagneten bestimmt und ausgibt.

Die Anordnung ist dabei in einen oder mehreren Ausgestaltungen so ausgeführt, dass damit die unterschiedlichen Ausführungsformen des vorangehend erläuterten Verfahrens ausgeführt werden können.

Das vorgeschlagene Verfahren und die zugehörige Anordnung lassen sich in allen technischen Bereichen einsetzen, in denen die Position des Ankers eines Elektromagneten überwacht oder bestimmt werden soll. Das Verfahren und die Anordnung ermöglichen die Positionserkennung des Ankers in bis zu drei Achsen. Das Messsystem der Anordnung kann nachträglich an bereits vorhandene Elektromagneten angebracht werden, ohne diese im Aufbau verändern zu müssen. Das Joch oder der Anker des jeweiligen Elektromagneten muss hierzu nur an wenigstens einer Messstelle elektrisch kontaktiert werden. Dies kann beispielsweise durch Anklemmen, Anlöten oder Schrauben entsprechender elektrischer Kontakte an das Joch oder den Anker erfolgen.

## Kurze Beschreibung der Zeichnungen

Das vorgeschlagene Verfahren und die zugehörige Anordnung werden im Folgenden anhand von zwei Ausführungsbeispielen in Verbindung mit den Zeichnungen nochmals näher erläutert. Hierbei zeigen:

Fig. 1    ein Beispiel für die vorgeschlagene Anordnung mit einem rotationssymmetrischen Elektromagneten in der Ruheposition des Ankers;

Fig. 2    die Anordnung gemäß Figur 1 mit einem ausgelenkten Zustand des Ankers;

Fig. 3    ein weiteres Beispiel für die vorgeschlagene Anordnung mit einem Elektromagneten mit Tauchanker im Querschnitt;

Fig. 4    die Anordnung der Figur 3 in einer Ansicht von unten; und

Fig. 5    ein Beispiel für die Mess- und Auswerteeinrichtung der vorgeschlagenen Anordnung.

## Wege zur Ausführung der Erfindung

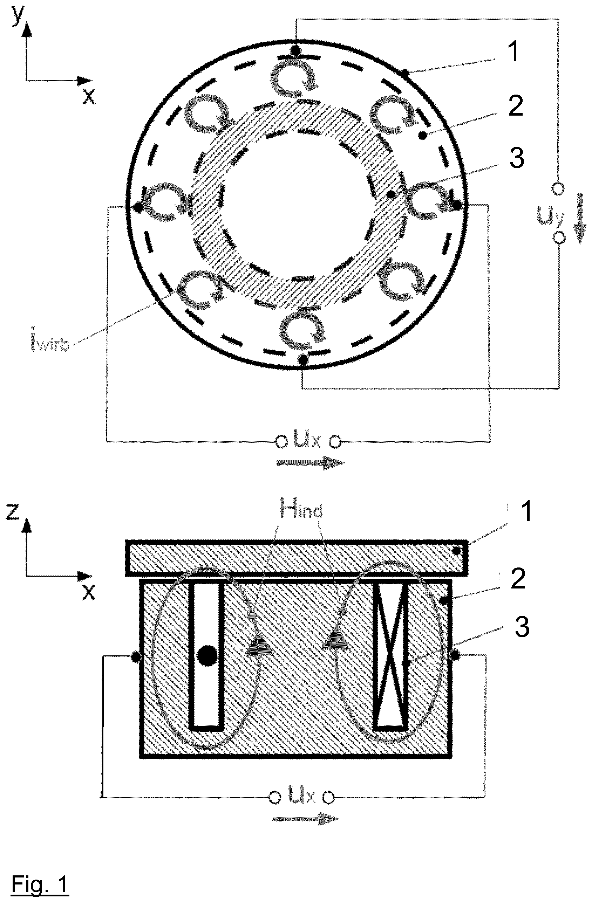

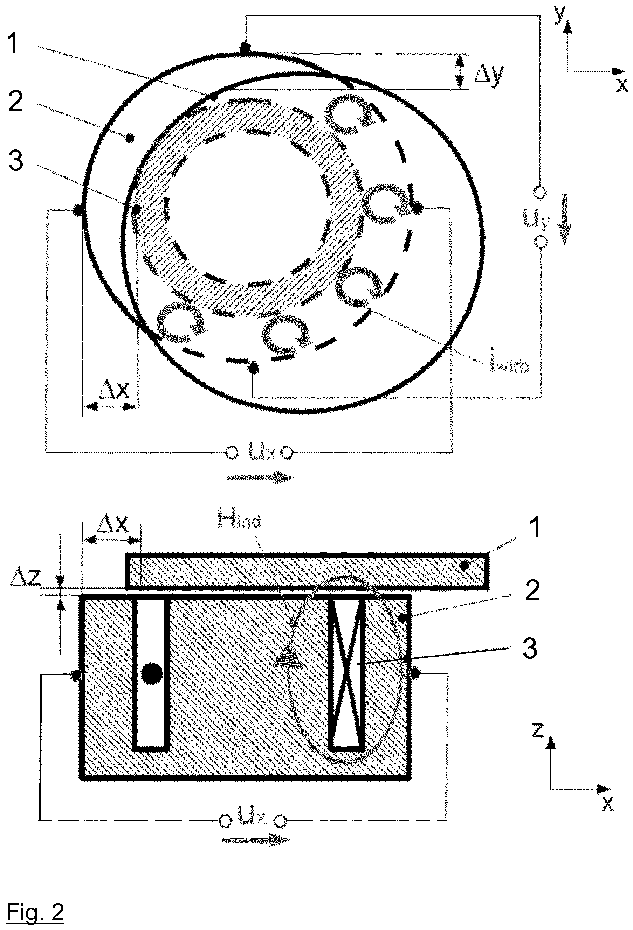

Das vorgeschlagene Verfahren und die zugehörige Anordnung werden beispielhaft anhand eines rotationssymmetrischen Elektromagneten in Verbindung mit den Figuren 1 und 2 nochmals erläutert. Figur 1 zeigt hierbei in der oberen Teilabbildung eine Draufsicht auf den Elektromagneten 1, in der der aufliegende Anker 1 zu erkennen ist. Das unter dem Anker liegende Joch 2 sowie die Spule 3 sind in dieser Teilabbildung ebenfalls angedeutet. In der unteren Teilabbildung der Figur 1 ist dieser Elektromagnet auch nochmals im Querschnitt dargestellt, wobei auch die Richtung des durch die stromdurchflossene Spule 3 erzeugten Magnetfeldes $H_{ind}$ mit den umlaufenden Pfeilen angedeutet ist. Der Anker 1 befindet sich bei der Figur 1 im Ruhezustand, in dem der Magnetkreis durch den Anker geschlossen ist. Es liegt damit keine Verschiebung des Ankers 1 relativ zum Joch 2 vor, der Anker 1 befindet sich in Nullstellung oder Nullposition. In diesem Zustand wird von einer homogenen Verteilung der Wirbelströme im Joch 2 ausgegangen.

In diesem Beispiel werden zwei Differenzspannungen $u_y$ und $u_x$ an jeweils zwei Messstellen am Joch 2 gemessen. Die Achsen der jeweils zwei Messstellen liegen in diesem Beispiel senkrecht zueinander, einmal parallel zur x-Achse und einmal parallel zur y-Achse, wie dies aus der Figur 1 erkennbar ist. Die Auswerteeinrichtung ist in dieser und den nachfolgenden Figuren 2 bis 4 nicht dargestellt.

Sowohl die Differenzspannung $u_x$ als auch die Differenzspannung $u_y$ sind im Fall der homogenen Verteilung der Wirbelströme im Joch gleich Null, da kein Potentialunterschied vorliegt. Wird der Anker 1 nun aus der Nullstellung um $\Delta x$ und/oder $\Delta y$ verschoben, wie dies in der Figur 2 dargestellt ist, so hat dies eine inhomogene Verteilung der Wirbelströme und somit einen Potentialunterschied im Joch 2 zur Folge. Die Differenzspannungen $u_x$ oder $u_y$ sind nun ungleich Null. Durch eine Auswertung der Amplituden dieser Differenzspannungen kann dann die genaue Position des Ankers 1 relativ zum Joch 2 in x- und y-Richtung bestimmt werden.

Eine Verschiebung in z-Richtung kann bei diesem Elektromagneten über die Messung der Differenzspannungen nur dann detektiert werden, wenn gleichzeitig eine Verschiebung in x-Richtung, in y-Richtung oder in x- und y-Richtung vorliegt. Eine solche Verschiebung in z-Richtung wirkt sich dabei gleichermaßen auf die Amplitude von $u_x$ und $u_y$ aus.

Erfolgt allerdings eine Verschiebung alleine in z-Richtung, so kann dies nicht über die Differenzspannungen $u_x$ und $u_y$ erfasst werden. Bei alleiniger Verschiebung in z-Richtung bleibt die Verteilung der Wirbelströme homogen. Um auch eine Verschiebung des Ankers alleine in z-Richtung feststellen zu können, bestehen mehrere Möglichkeiten. Eine Möglichkeit besteht darin, zusätzlich eine Auswertung des Spulenstromes über einen Mess-Shunt vorzunehmen, wie dies aus dem Stand der Technik bekannt ist. Eine weitere Möglichkeit besteht in einer asymmetrischen elektrischen Kontaktierung am Umfang des Jochs, die dann die Detektion des Ankers in z-Richtung ermöglicht. Auch durch eine geschickte elektrische Kontaktierung des Ankers besteht die Möglichkeit der Detektion der Ankerposition in z-Richtung.

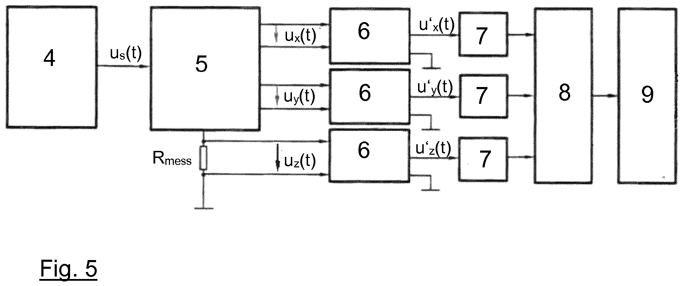

Die Messung und Auswertung für beide Varianten, das heißt alleine auf Basis der Differenzspannungen oder in Kombination mit der Erfassung des Spulenstroms, kann mit Einrichtungen erfolgen, wie sie aus dem Stand der Technik bekannt sind. Figur 5 zeigt hierzu eine beispielhafte Mess- und Auswerteschaltung. Die Energieversorgung 4 erzeugt einen zeitlich veränderlichen Strom bzw. eine zeitlich veränderliche Spannung, welche in die Spule des Elektromagneten 5 eingespeist wird. Die Differenzspannungen $u_x$, $u_y$ und $u_z$ werden von Differenzverstärkern 6 in die Signale $u'_x$, $u'_y$ und $u'_z$ umgewandelt. Hierbei werden die Differenzspannungen $u_x$ und $u_y$ zwischen den elektrischen Abgriffen am Joch des Elektromagneten 5 gemessen, die Differenzspannung $u_z$ resultiert aus der Messung des Spulenstroms über einen Messshunt ($R_{mess}$). Die Signale $u'_x$, $u'_y$ und $u'_z$ werden anschließend von Analog-Digital-Wandlern 7 aufbereitet und an einen Mikroprozessor 8 weitergeleitet. Der Mikroprozessor 8 wertet die Signale aus und gibt das Ergebnis an ein I/O-Interface 9 zur Ausgabe der ermittelten Ankerposition weiter.

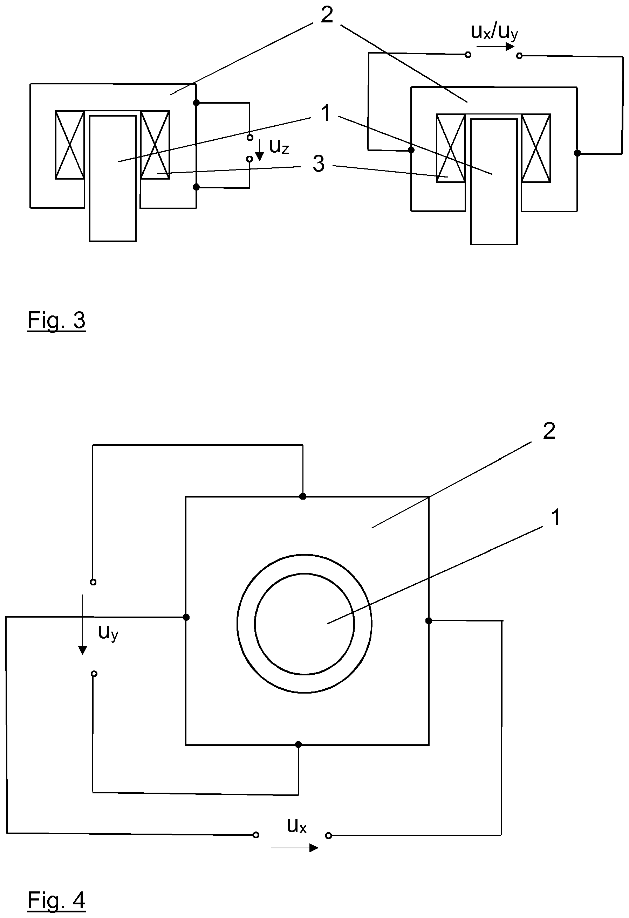

Figur 3 zeigt beispielhaft eine weitere Ausgestaltung der vorgeschlagenen Anordnung mit einem Elektromagneten, der einen Tauchanker aufweist. Im linken Teil der Figur 3 ist hierbei wiederum das Joch 2 mit der Spule 3 zu erkennen, in dem der Tauchanker 1 angeordnet ist. Die Detektion der Ankerposition in z-Richtung erfolgt dabei über die Messung der Differenzspannung $u_z$ an den beiden im linken Teil der Figur angedeuteten Messstellen. Eine Ankerverkippung wird über eine Messung von $u_x$ und $u_y$ zwischen den im rechten Teil der Figur 3 angedeuteten Messstellen gemessen. In dieser Teilabbildung ist dabei jeweils nur eine der beiden Messstellenpaare zu erkennen, da das zweite Messstellenpaar in der Ebene senkrecht zur Zeichnungsebene liegt. Dies ist in der Figur 4 zu erkennen, die diese Anordnung nochmals in einer Ansicht von unten darstellt. Durch eine asymmetrische Anordnung der Messstellen für die Messung von $u_x$ oder $u_y$, bspw. indem die beiden Messstellen für die Messung der Differenzspannung im rechten Teil der Figur 3 axial nicht auf der gleichen Höhe liegen, kann über die Messung der Differenzspannung auch die Position des Ankers in z-Richtung bestimmt werden.

Bezugszeichenliste

1      Joch
2      Anker
3      Spule
4      Energieversorgung
5      Elektromagnet
6      Differenzverstärker
7      Analog-Digital-Wandler
8      Mikroprozessor
9      I/O-Interface

Patentansprüche

1. Verfahren zur Bestimmung der Position des Ankers (1) eines Elektromagneten, bei dem

     - an einem Joch (2) des Elektromagneten oder am Anker (1) wenigstens eine Differenzspannung zwischen zwei Messstellen am Joch (2) oder Anker (1) oder zwischen einer Messstelle am Joch (2) oder Anker (1) und einem Bezugspotential gemessen wird, über die durch Auslenkung des Ankers (1) aus einer Nullposition hervorgerufene Potentialunterschiede im Joch (2) oder Anker (1) erfassbar sind, und
     - aus der gemessenen Differenzspannung die Position des Ankers (1) relativ zu einer Bezugsposition am Elektromagneten bestimmt wird.

2. Verfahren nach Anspruch 1,
**dadurch gekennzeichnet,**
**dass** die Position des Ankers (1) anhand einer Kalibrierkurve oder Kalibriertabelle bestimmt wird, die vorab für den Elektromagneten erstellt wurde.

3. Verfahren nach Anspruch 1,
**dadurch gekennzeichnet,**
**dass** die Position des Ankers (1) anhand einer aus dem Induktionsgesetz abgeleiteten Abhängigkeit der Höhe der Differenzspannung von der Position des Ankers (1) relativ zur Bezugsposition bestimmt wird.

4. Verfahren nach einem der Ansprüche 1 bis 3,
**dadurch gekennzeichnet,**
**dass** die wenigstens zwei Messstellen am Joch (2) oder Anker (1), zwischen denen die Differenzspannung gemessen wird, so gewählt werden, dass sie einen möglichst großen Abstand voneinander aufweisen.

5. Verfahren nach einem der Ansprüche 1 bis 4,
**dadurch gekennzeichnet,**
**dass** mehrere Differenzspannungen zwischen unterschiedlichen Messstellen am Joch (2) oder Anker (1) gemessen werden, um daraus die Position des Ankers (1) zu bestimmen.

6. Verfahren nach Anspruch 5,
**dadurch gekennzeichnet,**
**dass** wenigstens zwei Differenzspannungen zwischen jeweils zwei Messstellen gemessen werden, die auf zueinander senkrechten Achsen liegen.

7. Verfahren nach einem der Ansprüche 1 bis 5,
**dadurch gekennzeichnet,**
**dass** die wenigstens zwei Messstellen am Joch (2) oder Anker (1), zwischen denen die Differenzspannung gemessen wird, asymmetrisch am Joch (2) oder Anker (1) angeordnet werden.

8. Verfahren nach einem der Ansprüche 1 bis 6,
**dadurch gekennzeichnet,**
**dass** zusätzlich ein Spulenstrom des Elektromagneten über einen Mess-Shunt gemessen und für ei-

9         **EP 3 571 703 B1**        10

ne Bestimmung von Positionen des Ankers (1) ausgewertet wird, die keine Potentialunterschiede im Joch (2) hervorrufen.

9. Verfahren nach einem der Ansprüche 1 bis 8, **dadurch gekennzeichnet,** **dass** die Messung der wenigstens einen Differenzspannung über wenigstens einen elektrischen Abgriff am Joch (2) oder Anker (1) erfolgt.

10. Anordnung mit einem Elektromagneten, der wenigstens eine Spule (3), ein Joch (2) und einen relativ zum Joch beweglichen Anker (1) aufweist, wobei am Joch (2) oder am Anker (1) wenigstens ein elektrischer Abgriff zur Messung einer Differenzspannung zwischen zwei Messstellen oder zwischen einer Messstelle und einem Bezugspotential angebracht ist, über den das Joch oder der Anker an den Messstellen elektrisch kontaktiert wird, einer mit dem elektrischen Abgriff verbundenen Messeinrichtung zur Messung der Differenzspannung und einer Auswerteeinrichtung (8, 9), die dazu ausgestaltet ist, Basis der gemessenen Differenzspannung eine Position des Ankers (1) relativ zu einer Bezugsposition am Elektromagneten zu bestimmen und auszugeben.

11. Anordnung nach Anspruch 10, **dadurch gekennzeichnet,** **dass** mehrere elektrische Abgriffe zur Messung mehrerer Differenzspannungen am Joch (2) oder am Anker (1) angebracht und jeweils mit einer Messeinrichtung zur Messung der jeweiligen Differenzspannung verbunden sind, wobei die Auswerteeinrichtung (8, 9) so ausgebildet ist, dass sie aus den gemessenen Differenzspannungen die Position des Ankers (1) relativ zur Bezugsposition bestimmt und ausgibt.

12. Anordnung nach Anspruch 11, **dadurch gekennzeichnet,** **dass** wenigstens zwei der elektrischen Abgriffe so am Joch (2) oder am Anker (1) angebracht sind, dass ihre Messstellen auf zueinander senkrechten Achsen liegen.

13. Anordnung nach einem der Ansprüche 10 bis 12, **dadurch gekennzeichnet,** **dass** die Anordnung zusätzlich eine Messeinrichtung zur Messung eines Spulenstroms des Elektromagneten aufweist und die Auswerteeinrichtung (8, 9) so ausgebildet ist, dass sie den gemessenen Spulenstrom für eine Bestimmung von Positionen des Ankers (1) auswertet, die keine Potentialunterschiede im Joch (2) oder Anker (1) hervorrufen.

**Claims**

1. Method for determining the position of the armature (1) of an electromagnet, in which

   - on a yoke (2) of the electromagnet or on the armature (1), at least one voltage difference is measured between two measuring points on the yoke (2) or armature (1), or between one measuring point on the yoke (2) or armature (1) and a reference potential, via which potential differences in the yoke (2) or armature (1) caused by a deflection of the armature (1) from a null position can be detected, and
   - from the measured voltage difference, the position of the armature (1) relative to a reference position on the electromagnet is determined.

2. Method according to Claim 1, **characterised in that** the position of the armature (1) is determined by means of a calibration curve or calibration table that has previously been created for the electromagnet.

3. Method according to Claim 1, **characterised in that** the position of the armature (1) is determined on the basis of a dependence, derived from the induction law, of the magnitude of the voltage difference on the position of the armature (1) relative to the reference position.

4. Method according to one of the Claims 1 to 3, **characterised in that** the at least two measuring points on the yoke (2) or armature (1), between which the voltage difference is measured, are selected such that they are as far apart from one another as possible.

5. Method according to one of the Claims 1 to 4, **characterised in that** a plurality of voltage differences are measured between different measuring points on the yoke (2) or armature (1) in order to determine the position of the armature (1).

6. Method according to Claim 5, **characterised in that** at least two voltage differences are measured in each case between two measuring points, which are located on axes that are at right angles to one another.

7. Method according to one of the Claims 1 to 5, **characterised in that** the at least two measuring points on the yoke (2) or armature (1), between which the voltage difference is measured, are arranged asymmetrically on the yoke (2) or armature (1).

8. Method according to one of the Claims 1 to 6, **characterised in that** in addition a coil current of the electromagnet is measured via a measuring shunt, and evaluated so as to determine positions of the armature (1) that do not cause any potential differences in the yoke (2).

9. Method according to one of the Claims 1 to 8, **characterised in that** the measurement of the at least one voltage difference takes place via at least one electrical pick-up on the yoke (2) or armature (1).

10. Arrangement with an electromagnet, which has at least a coil (3), a yoke (2), and an armature (1), which can move relative to the yoke, wherein at least one electrical pick-up is attached to the yoke (2) or the armature (1) for purposes of measuring a voltage difference between two measuring points, or between one measuring point and a reference potential, via which pick-up electrical contact is made at the measuring points with the yoke or armature, with a measuring device connected to the electrical pick-up for purposes of measuring the voltage difference, and with an evaluation device (8, 9), which is configured to determine and output a position of the armature (1) relative to a reference position on the electromagnet on the basis of the measured voltage difference.

11. Arrangement according to claim 10, **characterised in that** a plurality of electrical pick-ups for purposes of measuring a plurality of voltage differences are attached to the yoke (2) or the armature (1), and are in each case connected to a measuring device for purposes of measuring the voltage difference in question, wherein the evaluation device (8, 9) is designed such that it determines and outputs the position of the armature (1) relative to the reference position from the measured voltage differences.

12. Arrangement according to claim 11, **characterised in that** at least two of the electrical pick-ups are attached to the yoke (2) or on the armature (1) such that their measuring points lie on axes at right angles to one another.

13. Arrangement according to one of the claims 10 to 12, **characterised in that** in addition the arrangement has a measuring device for purposes of measuring a coil current of the electromagnet, and the evaluation device (8, 9) is designed such that it evaluates the measured coil current for purposes of determining positions of the armature (1) that do not cause potential differences on the yoke (2) or armature (1).

**Revendications**

1. Procédé pour la détermination de la position de l'armature (1) d'un électroaimant, dans lequel

- au niveau d'une culasse (2) de l'électroaimant ou au niveau de l'armature (1), au moins une tension différentielle entre deux points de mesure sur la culasse (2) ou l'armature (1) ou entre un point de mesure sur la culasse (2) ou l'armature (1) et un potentiel de référence est mesurée, par l'intermédiaire de laquelle des différences de potentiel dans la culasse (2) ou l'armature (1) provoquées par l'excursion de l'armature (1) par rapport à une position zéro peuvent être détectées, et
- à partir de la tension différentielle mesurée, la position de l'armature (1) par rapport à une position de référence sur l'électroaimant est déterminée.

2. Procédé selon la revendication 1, **caractérisé en ce que** la position de l'armature (1) est déterminée à l'aide d'une courbe d'étalonnage ou d'une table d'étalonnage, laquelle a été établie à l'avance pour l'électroaimant.

3. Procédé selon la revendication 1, **caractérisé en ce que** la position de l'armature (1) est déterminée à l'aide d'une dépendance, dérivée de la loi d'induction, de la hauteur de la tension différentielle de la position de l'armature (1) par rapport à la position de référence.

4. Procédé selon l'une des revendications 1 à 3, **caractérisé en ce que** les au moins deux points de mesure sur la culasse (2) ou l'armature (1), entre lesquels on mesure la tension différentielle, sont sélectionnés de manière à présenter une distance la plus grande possible entre eux.

5. Procédé selon l'une des revendications 1 à 4, **caractérisé en ce que** plusieurs tensions différentielles entre des points de mesure différents sur la culasse (2) ou l'armature (1) sont mesurées pour déterminer à partir de cela la position de l'armature (1).

6. Procédé selon la revendication 5, **caractérisé en ce qu'**au moins deux tensions différentielles entre respectivement deux points de mesure sont mesurées, lesquels se situent sur des axes perpendiculaires entre eux.

7. Procédé selon l'une des revendications 1 à 5, **caractérisé en ce que** les au moins deux points de mesure sur la culasse (2) ou l'armature (1), entre lesquels on mesure la tension différentielle, sont disposés de façon asymétrique sur la culasse (2) ou l'armature (1).

8. Procédé selon l'une des revendications 1 à 6, **caractérisé en ce que** l'on mesure additionnellement un courant de bobine de l'électroaimant via un shunt de mesure et l'évalue pour une détermination de positions de l'armature (1), lesquelles ne provoquent pas de différences de potentiel dans la culasse (2).

9. Procédé selon l'une des revendications 1 à 8, **caractérisé en ce que** la mesure de l'au moins une tension différentielle s'effectue via au moins un dispositif de prélèvement électrique au niveau de la culasse (2) ou de l'armature (1).

10. Agencement avec un électroaimant, lequel présente au moins une bobine (3), une culasse (2) et une armature (1) mobile par rapport à la culasse, dans lequel au moins un dispositif de prélèvement électrique est mis en place au niveau de la culasse (2) ou l'armature (1) pour la mesure d'une tension différentielle entre deux points de mesure ou entre un point de mesure et un potentiel de référence, via lequel la culasse ou l'armature est contacté(e) électriquement aux points de mesure, un dispositif de mesure relié au dispositif de prélèvement électrique pour mesurer la tension différentielle, et un dispositif d'évaluation (8, 9) réalisé, sur la base de la tension différentielle mesurée, pour déterminer une position de l'armature (1) par rapport à une position de référence au niveau de l'électroaimant et la faire sortir.

11. Agencement selon la revendication 10, **caractérisé en ce que** plusieurs dispositifs de prélèvement électriques pour la mesure de plusieurs tensions différentielles au niveau de la culasse (2) ou de l'armature (1) sont mis en place et sont respectivement reliés à un dispositif de mesure pour mesurer la tension différentielle respective, dans lequel le dispositif d'évaluation (8, 9) est réalisé de manière à déterminer, à partir des tensions différentielles mesurées, la position de l'armature (1) par rapport à la position de référence et à la faire sortir.

12. Agencement selon la revendication 11, **caractérisé en ce qu'**au moins deux des dispositifs de prélèvement électriques sont mis en place au niveau de la culasse (2) ou de l'armature (1) de manière à ce que leurs points de mesure se situent sur des axes perpendiculaires entre eux.

13. Agencement selon l'une des revendications 10 à 12, **caractérisé en ce que** l'agencement présente additionnellement un dispositif de mesure pour mesurer un courant de bobine de l'électroaimant et que le dispositif d'évaluation (8, 9) est réalisé de manière à ce qu'il évalue le courant de bobine mesuré pour une détermination de positions de l'armature (1), lesquelles ne produisent pas de différences de potentiel dans la culasse (2) ou l'armature (1).

Fig. 1

1

2

3

Δy

y

x

u_y

i_wirb

Δx

u_x

Δx

H_ind

1

Δz

2

3

z

x

u_x

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19505219 A1
- DE 102012005685 A1
- DE 102013215939 A1
- DE 2226101 A
- DE 4129265 A1
- EP 0949744 A2
- DE 19501766 A1
- DE 102014012307 B3

**In der Beschreibung aufgeführte Nicht-Patentliteratur**

- **VON A. AMBIA et al.** Electrical Impedance Imaging Using Eddy Current. *International Journal of Electrical, Computer, Energetic, Electronic and Communication Engineering,* 2008, vol. 2 (4), 597-600